# EUROPÄISCHE PATENTANMELDUNG

(11) **EP 4 588 861 A1**
(43) Veröffentlichungstag der Anmeldung: **23.07.2025**
(21) Anmeldenummer: 24152567.4
(22) Anmeldetag: 18.01.2024
(51) Int. Cl.: B65G 17/32, B65G 21/20

(54) **FÖRDERVORRICHTUNG, FÖRDERBAND FÜR EINE DERARTIGE FÖRDERVORRICHTUNG, EINSATZEINHEIT FÜR EIN DERARTIGES FÖRDERBAND UND VERWENDUNG EINES DERARTIGEN FÖRDERBANDS**

(71) Anmelder: SOMIC Verpackungsmaschinen GmbH & Co. KG, 83123 Amerang (DE)
(72) Erfinder: König, Maximilian, 83259 Schleching (DE); Classen, Egbert, 83137 Schonstett (DE)
(74) Vertreter: Weickmann & Weickmann PartmbB

(57) **Zusammenfassung**

Die Erfindung betrifft eine Fördervorrichtung (200) umfassend ein Förderband (202) mit einer Auflagefläche (203) und eine dem Förderband (202) zugeordnete Ventilkammer (216), wobei die Ventilkammer (216) einen mit einer Saugleitung (220) in Verbindung stehenden Ventilsitz (218) und ein Ventilverschlusselement (224) aufweist, wobei das Ventilverschlusselement (224) zwischen einer den Ventilsitz (218) verschließenden und einer den Ventilsitz (218) freigebenden Stellung verstellbar ist, und ferner umfassend wenigstens einen in die Ventilkammer (216) mündenden Strömungspfad (214), wobei dann, wenn der Strömungspfad (214) von einem auf dem Förderband (202) zu fördernden Objekt (208) nicht bedeckt ist, auf das Ventilverschlusselement (224) eine in Richtung der verschließenden Stellung wirkende Kraft ausgeübt wird, und dann, wenn der Strömungspfad (214) bedeckt ist, auf das Ventilverschlusselement (224) eine in Richtung der freigebenden Stellung wirkende Kraft ausgeübt wird. Erfindungsgemäß mündet der wenigstens eine Strömungspfad (214) in die Bodenfläche (212) einer in der Auflagefläche (203) vorgesehenen Vertiefung (210).

## Beschreibung

Die Erfindung betrifft eine Fördervorrichtung, welche ein Förderband mit einer Auflagefläche umfasst, eine dem Förderband zugeordnete Ventilkammer umfasst, wobei die Ventilkammer einen mit einer Saugleitung in Verbindung stehenden Ventilsitz und ein Ventilverschlusselement aufweist, wobei das Ventilverschlusselement zwischen einer den Ventilsitz verschließenden und einer den Ventilsitz freigebenden Stellung verstellbar ist, und wenigstens einen in die Ventilkammer mündenden Strömungspfad umfasst, wobei dann, wenn ein der Auflagefläche zugeordnetes Ende des Strömungspfads von einem auf dem Förderband zu fördernden, aber nicht zur Fördervorrichtung gehörenden Objekt nicht bedeckt ist, mittels einer von der Saugleitung herrührenden Strömung auf das Ventilverschlusselement eine Kraft ausgeübt wird, welche es in Richtung seiner den Ventilsitz verschließenden Stellung zieht, und wobei dann, wenn das der Auflagefläche zugeordnete Ende des Strömungspfads von dem auf dem Förderband zu fördernden, aber nicht zur Fördervorrichtung gehörenden Objekt bedeckt ist, auf das Ventilverschlusselement eine in Richtung der den Ventilsitz freigebenden Stellung des Ventilverschlusselements wirkende Kraft ausgeübt wird.

Derartige Fördervorrichtungen weisen in der Regel ein Förderband auf, das dazu eingerichtet ist, aufliegendes Fördergut zu transportieren. Grundsätzlich könnte das Fördergut auch lediglich auf dem Förderband aufgelegt gefördert werden. Jedoch ist es von Vorteil, das Fördergut mit einer zusätzlichen Haltekraft zu beaufschlagen, um dessen Verrutschen oder Herabfallen zu vermeiden.

In der Praxis kann eine derartige Haltekraft durch eine Beaufschlagung des Fördergutes mit Unterdruck erzielt werden. Hierzu wird in der Regel ein Saugkasten unter dem Förderband angebracht, der über ein Unterdruckgebläse einen Unterdruck erzeugt, der über entsprechende Öffnungen in dem Förderband auf das Fördergut einwirkt.

Derart ausgestaltete Förderbänder müssen jedoch mit einer hohen Anzahl an Öffnungen versehen sein, um eine genügende Abdeckung für die Auflagefläche des zu transportierenden Gutes aufzuweisen, denn meist ist nicht bekannt, an welcher Stelle das Produkt auf dem Saugförderband zu liegen kommt. Darüber hinaus ist eine hohe Anzahl an Öffnungen auch hinsichtlich der Haltekraft, die auf das Fördergut aufgebracht werden kann, vorteilhaft.

Öffnungen, die nicht durch Fördergut belegt sind, werden im regulären Betrieb trotzdem mit Unterdruck beaufschlagt. Dies verursacht nicht nur Lärmemissionen. Es wird dadurch auch unnötig viel Energie verbraucht, da das Unterdruckgebläse entsprechend leistungsstark ausgelegt werden muss.

Um hier Abhilfe zu schaffen, wurde in der EP 2 492 222 A1 vorgeschlagen, einen Raum unter dem Förderband durch eine erhöhte Auflagerung des Förderbandes zu schaffen und das Förderband elastisch auszugestalten. Dadurch ergibt sich bei der Beaufschlagung mit Unterdruck ein Verschluss der Saugleitung, wenn kein Fördergut auf den jeweilig zu der Saugleitung benachbarten Öffnungen aufliegt, und eine Haltekraft auf das Fördergut, sobald dieses auf dem Förderband aufliegt. Jedoch hat sich in der Praxis gezeigt, dass durch diese Anordnung lediglich eine relativ geringe Haltekraft erzielt werden kann, mit der das Fördergut nicht genügend sicher auf dem Förderband gehalten wird.

Es ist daher Aufgabe der Erfindung, eine diesbezüglich verbesserte Fördervorrichtung bereitzustellen.

Diese Aufgabe wird erfindungsgemäß durch eine Fördervorrichtung der eingangs genannten Art gelöst, bei welcher der wenigstens eine Strömungspfad in die Bodenfläche einer in der Auflagefläche vorgesehenen Vertiefung mündet. Da die dem wenigstens einen Strömungspfad zugeordnete Vertiefung eine größere Querschnittsfläche aufweist als die bloße Öffnung des Strömungspfads, wirkt der von dem Unterdruckgebläse erzeugte Unterdruck auf eine größere Fläche und bewirkt somit eine entsprechend größere Haltekraft auf das Fördergut. Wird mit einer vorgegebenen Querschnittsfläche der Vertiefung eine ausreichende Haltekraft bereitgestellt, so kann zudem bei weiterer Vergrößerung der Querschnittsfläche der Vertiefung die Luftförderleistung des Unterdruckgebläses verringert werden. Daher kann für die erfindungsgemäße Fördervorrichtung ein Unterdruckgebläse gewählt werden, das auch insgesamt einen kleineren Raum in der Anlage einnimmt und/ oder eine geringere Leistungsaufnahme erfordert. Daher kann in Weiterbildung der Erfindung die Fördervorrichtung ferner als Teil des Unterdruckgebläses eine der Saugleitung zugeordnete Vakuumeinheit umfassen. Mit einer derartigen Vakuumeinheit wird im Vergleich zu den üblicherweise eingesetzten Seitenkanalverdichtern weniger Energie verbraucht, daher ist diese nachhaltiger und kostensparender. Außerdem wird in der Anlage und insgesamt für die Fördervorrichtung weniger Platz benötig, da die Vakuumeinheit auch in der Regel geringere Abmessungen hat.

Ein weniger komplexer Aufbau und eine einfachere Herstellung der erfindungsgemäßen Förderbandvorrichtung kann zum Beispiel dadurch erzielt werden, dass die Ventilkammer in dem Förderband ausgebildet ist. Hierdurch wird auch eine reduzierte Aufbauhöhe der Förderbandvorrichtung erreicht. Zusätzlich oder alternativ wird hierdurch auch ein einfacher Austausch älterer Bänder ermöglicht, ohne einen aufwändigen Umbau der Altanlage zu erfordern.

Um die Herstellung und den Aufbau noch weiter vereinfachen zu können, kann in einem Ausführungsbeispiel der Erfindung eine Decklage des Förderbandes, welche der Auflagefläche zugeordnet ist, oder wenigstens ein Teilbereich der Decklage des Förderbandes, welche der Auflagefläche zugeordnet ist, das Ventilverschlusselement bilden. Dies ist auch im Hinblick auf eine Wartung vorteilhaft. Die Decklage kann hierbei über einem Kerngurt angeordnet sein. Und unter dem Kerngurt kann sich die Unterdruckkammer befinden, an der das Unterdruckgebläse angeschlossen ist.

Durch die sich wiederholenden Bewegungen der Decklage zwischen einer den Ventilsitz verschließenden Stellung und einer den Ventilsitz freigebenden Stellung können sich in diesem Bereich Schäden durch eine erhöhte Belastung ausbilden. Um dies zu vermeiden, wird in Weiterbildung dieses Ausführungsbeispiels vorgeschlagen, dass die Decklage des Förderbandes, welche der Auflagefläche zugeordnet ist, zumindest in einem Teilbereich elastisch, beispielsweise unter Verwendung von Naturkautschuk und/oder Silikonkautschuk, ausgebildet ist. Vorzugsweise kann hier ein dauerelastisches Material verwendet werden. Vorzugsweise kann sich der elastisch ausgebildete Teilbereich über dem Ventilsitz befinden. Durch den gezielten Einsatz des Decklagenmaterials können weiter Kosten eingespart werden.

Um die Belastung der Decklage der Fördervorrichtung in dem Bereich über dem Ventilsitz zu verringern, kann in einer Weiterbildung dieses Ausführungsbeispiels daran gedacht werden, das Ventilverschlusselement als ein im Wesentlichen flächiges Element auszubilden, das aus der Decklage schwenkbar auslenkbar ist.

Um die notwendige Bewegung des Ventilverschlusselementes zwischen einer den Ventilsitz verschließenden Stellung und einer den Ventilsitz freigebenden Stellung zu ermöglichen, kann beispielsweise das im Wesentlichen flächige Element elastisch in Richtung auf die den Ventilsitz freigebende Stellung zu vorgespannt sein. Eine solche Vorspannung kann vorzugsweise durch eine Feder erreicht werden. Eine externe, d.h. nicht intrinsische, Vorspannung (wie zum Beispiel durch die Elastizität des Förderbandes) ermöglicht wiederum einen einfachen Ersatz des Vorspannungselements.

Gemäß einem Ausführungsbeispiels kann das Ventilverschlusselement als Kreissegment ausgebildet sein. Ein Kreissegment ist aufgrund der fehlenden Ecken im Hinblick auf Verschleißerscheinungen vorteilhaft.

Um eine möglichst einfache Herstellung der Fördervorrichtung zu erreichen, wird in einem Ausführungsbeispiel der Erfindung vorgeschlagen, das Ventilverschlusselement mit einem Scharnier in der Decklage anzuordnen.

In einer Weiterbildung des Ausführungsbeispiels kann das Ventilverschlusselement im Wesentlichen kugelförmig ausgebildet sein. Eine kugelförmige Ausbildung ermöglicht eine weitere Vereinfachung des Herstellungsverfahrens, da kugelförmige Verschlusselemente einfach verfügbar sind und auch einfacher herzustellen sind. Damit reduzieren sich auch die Kosten des Herstellungsverfahrens.

Damit das Ventilverschlusselement seine Funktion auch in einer kugelförmigen Ausformung erfüllen kann, wird vorgeschlagen, dass das im Wesentlichen kugelförmige Ventilverschlusselement elastisch in Richtung auf die den Ventilsitz freigebende Stellung zu vorgespannt sein kann und/oder mittels Schwerkraft in Richtung auf die den Ventilsitz freigebende Stellung zu gedrängt werden kann. Es ist einfach ersichtlich, dass durch diese konstruktive Ausbildung ein Austausch fehlerhafter oder defekter Ventilverschlusselemente vereinfacht und dadurch auch effizienter und kostensparender wird. Es muss nicht mehr, wie es in der Praxis der Fall ist, das ganze Förderband getauscht werden, sondern es reicht aus, einzelne, defekte oder fehlerhafte Ventilverschlusselemente zu tauschen. Dies kann geschehen, ohne destruktive Maßnahmen am Förderband vornehmen zu müssen, was wiederum Kosten spart.

In Weiterbildung der Erfindung kann das Förderband der Fördervorrichtung ferner ein endlos umlaufendes Förderband sein, und kann die Fördervorrichtung wenigstens zwei Umlenkwalzen umfassen, um die das endlose Förderband herum geführt ist.

Gemäß einem weiteren Gesichtspunkt betrifft die Erfindung ein Förderband umfassend eine Auflagefläche und eine dem Förderband zugeordnete Ventilkammer, wobei die Ventilkammer einen mit einer Saugleitung in Verbindung stehenden Ventilsitz und ein Ventilverschlusselement aufweist, wobei das Ventilverschlusselement zwischen einer den Ventilsitz verschließenden und einer den Ventilsitz freigebenden Stellung verstellbar ist, und wenigstens einen in die Ventilkammer mündenden Strömungspfad, wobei dann, wenn ein der Auflagefläche zugeordnetes Ende des Strömungspfads von einem auf dem Förderband zu fördernden, aber nicht zur Fördervorrichtung gehörenden Objekt nicht bedeckt ist, mittels einer von der Saugleitung herrührenden Strömung auf das Ventilverschlusselement eine Kraft ausgeübt wird, welche es in Richtung seiner den Ventilsitz verschließenden Stellung zieht, und wobei dann, wenn das der Auflagefläche zugeordnete Ende des Strömungspfads von dem auf dem Förderband zu fördernden, aber nicht zur Fördervorrichtung gehörenden Objekt bedeckt ist, auf das Ventilverschlusselement eine in Richtung der den Ventilsitz freigebenden Stellung des Ventilverschlusselements wirkende Kraft ausgeübt wird, bei welchem der wenigstens eine Strömungspfad erfindungsgemäß in die Bodenfläche einer in der Auflagefläche vorgesehenen Vertiefung mündet. Hinsichtlich der Vorteile dieses Förderbands sei auf die vorstehende Diskussion der erfindungsgemäßen Fördervorrichtung hingewiesen.

Gemäß einem noch weiteren Gesichtspunkt betrifft die Erfindung in eine Einsatzeinheit für ein Förderband gemäß dem vorangehenden Gesichtspunkt der Erfindung, umfassend eine Ventilanordnung mit wenigstens einem der vorstehend erläuterten Ventilanordnungsmerkmalen. Hinsichtlich der Vorteile dieser Einsatzeinheit sei auf die vorstehende Diskussion der erfindungsgemäßen Fördervorrichtung verwiesen.

Gemäß einem noch weiteren Gesichtspunkt betrifft die Erfindung die Verwendung eines Förderbandes der vorstehend diskutierten Art in einer erfindungsgemäßen Fördervorrichtung. Hinsichtlich der Vorteile dieser Verwendung sei auf die vorstehende Diskussion der erfindungsgemäßen Fördervorrichtung verwiesen.

Die Erfindung wird im Folgenden anhand der beigefügten Zeichnung an mehreren Ausführungsbeispielen näher erläutert werden. Es stellt dar:
- Figur 1: eine schematische Seitenansicht der erfindungsgemäßen Fördervorrichtung;
- Figur 2a: eine Schnittansicht durch eine erste Ausführungsform der erfindungsgemäßen Fördervorrichtung mit aufliegendem Fördergut;
- Figur 2b: eine Ansicht ähnlich Figur 2a, jedoch ohne aufliegendes Fördergut;
- Figur 3a: eine Schnittansicht durch eine zweite Ausführungsform der erfindungsgemäßen Fördervorrichtung mit aufliegendem Fördergut;
- Figur 3b: eine Ansicht ähnlich Figur 3a, jedoch ohne aufliegendes Fördergut;
- Figur 3c: eine Draufsicht auf die zweite Ausführungsform der erfindungsgemäßen Fördervorrichtung ;
- Figur 4a: eine Schnittansicht durch eine dritte Ausführungsform der erfindungsgemäßen Fördervorrichtung mit geöffnetem Ventilverschlusselement;
- Figur 4b: eine Ansicht ähnlich Figur 4a, jedoch mit geschlossenem Ventilverschlusselement;
- Figur 5a: eine Schnittansicht durch eine vierte Ausführungsform der erfindungsgemäßen Fördervorrichtung mit geöffnetem Ventilverschlusselement;
- Figur 5b: eine Ansicht ähnlich Figur 5a, jedoch mit geschlossenem Ventilverschlusselement;
- Figur 6a: eine Schnittansicht durch eine fünfte Ausführungsform der erfindungsgemäßen Fördervorrichtung mit geöffnetem Ventilverschlusselement;
- Figur 6b: eine Ansicht ähnlich Figur 6a, jedoch mit geschlossenem Ventilverschlusselement; und
- Figur 7: eine Schnittansicht durch eine sechste Ausführungsform der erfindungsgemäßen Fördervorrichtung, bei welcher die Ventilanordnung in einer Einsatzeinheit ausgebildet ist.

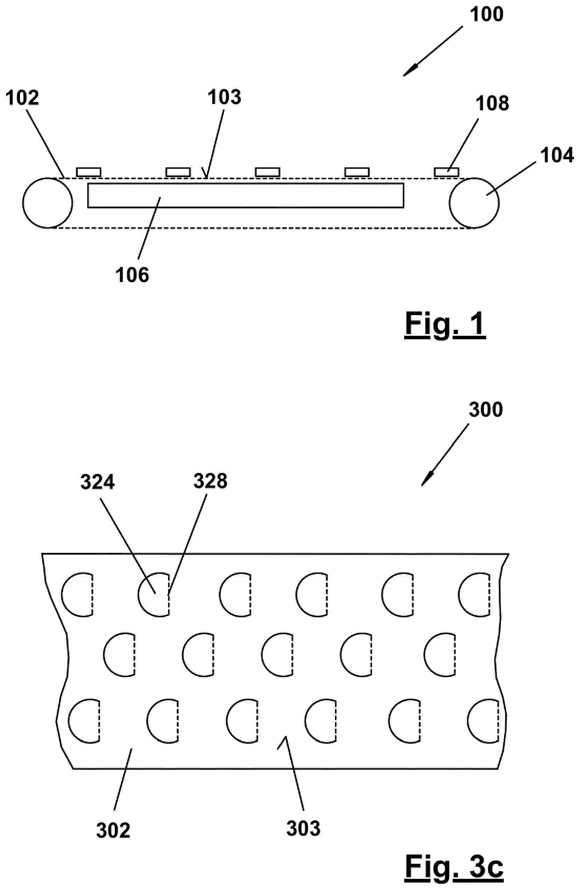

In Fig. 1 ist eine erfindungsgemäße Fördervorrichtung ganz allgemein mit 100 bezeichnet. Die Fördervorrichtung 100 umfasst ein Förderband 102 mit einer Auflagefläche 103, das als umlaufendes Gurtförderband mit Saugbohrungen über zwei Umlenkwalzen 104 geführt ist, einen Saugkasten bzw. eine Unterdruckkammer 106, der bzw. die unter dem oberen Teil des Förderbandes 102 angeordnet ist. Ferner ist Fördergut 108 dargestellt, das auf dem Förderband 102 aufliegt.

Das Obertrum des Förderbands 102 ist zwischen den beiden Umlenkwalzen 104 streckenweise über den Saugkasten 106 geführt. Der Saugkasten 106 ist an eine nicht dargestellte Vakuumeinheit angeschlossen. Anstelle der Vakuumeinheit kann auch ein Unterdruckgebläse oder ein Seitenkanalverdichter verwendet werden.

In den nachstehenden Figuren werden verschiedene Ausführungsformen erläutert werden, die allesamt den in Figur 1 dargestellten Grundaufbau aufweisen.

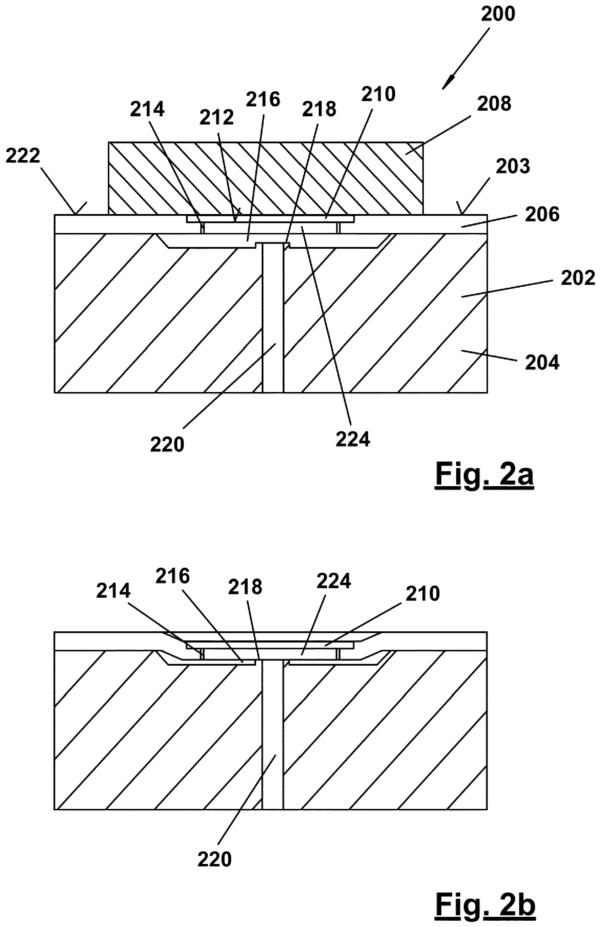

Figur 2a zeigt einen Ausschnitt einer ersten Ausführungsform der erfindungsgemäßen Fördervorrichtung 200. Hier wird ein aufliegendes Fördergut 208 auf einem Förderband 202 über die (hier nicht dargestellte) Unterdruckkammer geführt. Das Förderband 202 umfasst eine dauerelastische und fest verbundene Decklage 206 und einen Kerngurt 204, der aus einem anderen Material als die Decklage 206, insbesondere einem weniger elastischen Material, bestehen kann.

In der Decklage 206 sind Vertiefungen 210 vorgesehen, welche rund oder auch rechteckig ausgebildet sein können. Grundsätzlich ist jedoch auch jede andere Geometrie hierfür denkbar. In die Bodenfläche 212 dieser Vertiefungen 210 münden Strömungspfade 214, welche die Vertiefung 210 fluidisch mit einer Ventilkammer 216 verbinden. Die Ventilkammer 216 wird durch eine Vertiefung in der Oberfläche des Kerngurts 204, die an einer Oberfläche 222 der Decklage 206 anliegt, und dieser Oberfläche der Decklage 222 gebildet. Die Ventilkammer 216 wiederum ist fluidisch mit der Unterdruckkammer über eine Saugleitung 220 verbunden. Ein Ventilsitz 218 ist an der Einmündung der Saugleitung 220 in die Ventilkammer 216 angeordnet. Das Ventilverschlusselement 224 wird in der vorliegenden Ausführungsform durch die Decklage 206 gebildet.

In Fig. 2a ist eine den Ventilsitz freigebende Stellung des Ventilverschlusselementes 224, dargestellt. Wesentlich für diese Stellung ist, dass das Fördergut 208 die Vertiefung 210 vollständig überdeckt. Da hierdurch keine Luft in die Vertiefung 210 und durch die Strömungspfade 214 in die Ventilkammer 216 gesaugt werden kann, kann es über die Strömungspfade 214 auch kein Druck abfallen. In der Folge herrscht in der Vertiefung 210 und der Ventilkammer 216 der gleiche Druck, so dass die Eigenelastizität des Materials der Decklage 206 diese vom Ventilsitz 218 abhebt.

Fig. 2b zeigt eine Ansicht ähnlich Figur 2a, jedoch ohne aufliegendes Fördergut. In diesem Falle tritt unter der Wirkung des Unterdrucks der Saugleitung 220 Luft durch die Strömungspfade 214 gesaugt, so dass es zu einem Druckabfall über die Strömungspfade 214 kommt. Übersteigt die von der Druckdifferenz zwischen der Vertiefung 210 und der Ventilkammer 216 herrührende Kraft die Eigenelastizitätskraft der Decklage 206, so wird diese gegen den Ventilsitz 218 gezogen und verschließt ihn.

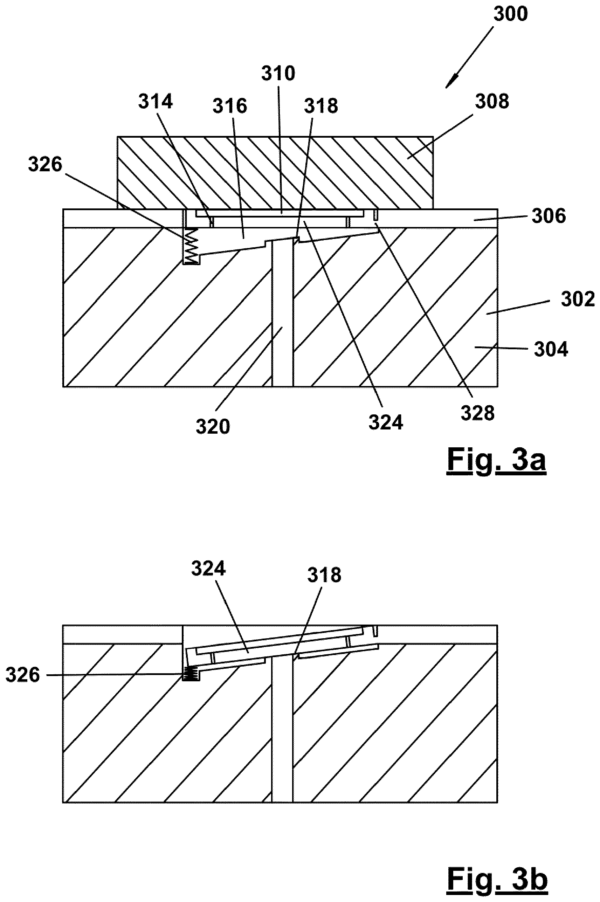

Die Figuren 3a bis 3c zeigen eine zweite Ausführungsform der erfindungsgemäßen Fördervorrichtung, die in weiten Zügen der ersten Ausführungsform der Figuren 2a und 2b entspricht. Daher sind in den Figuren 3a bis 3c analoge Teile mit den gleichen Bezugszeichen versehen, wie in den Figuren 2a und 2b, jedoch vermehrt um die Zahl 100. Darüber hinaus wird die Fördervorrichtung 300 der Figuren 3a bis 3c im Folgenden nur insoweit beschrieben werden, als sie sich von der Fördervorrichtung 200 der Figuren 2a und 2b unterscheidet, auf deren Beschreibung hiermit ansonsten verwiesen sei.

Auch bei der Ausführungsform der Figuren 3a bis 3c wird ein auf dem Förderband 302 aufliegendes Fördergut 308 mittels Unterdrucks auf diesem gehalten. Wiederum bilden ein Kerngurt 304 und eine dauerelastische Decklage 306 das Förderband 302. Die Decklage 306 braucht hier aus den nachstehend erläuterten Gründen jedoch nicht aus einem dauerelastischen Material gebildet zu sein.

Und zwar ist das Ventilverschlusselement 324 bei der Ausführungsform der Figuren 3a bis 3c durch ein im Wesentlichen flächiges Element gebildet, das aus der Decklage 306 schwenkbar auslenkbar und mit dieser über einen Scharnierabschnitt 328 verbunden ist. Der Scharnierabschnitt 328 kann beispielsweise als Einkerbung ausgebildet sein.

In der Decklage 306 ist eine Vertiefung 310 ausgebildet, über der das Fördergut 308 aufgelegt ist, so dass die Vertiefung 310 dem Fördergut 308 zugewandt ist. Die Vertiefung 310 bildet mit einem aufliegenden Fördergut 308 eine Kammer, welche über Strömungspfade 314 in dem Ventilverschlusselement 324 fluidisch mit der Ventilkammer 316 und über die Saugleitung 320 mit der Unterdrucckammer in Verbindung steht.

Die Ventilkammer 316 wird in diesem Ausführungsbeispiel durch die dem Fördergut 308 abgewandte Seite des Ventilverschlusselements 324 und die Oberfläche des Kerngurts 304 gebildet, welche schräg und im Wesentlichen einer Bewegungsbahn des Ventilverschlusselements 324 folgend ausgebildet ist. In der Ventilkammer 316 ist der Ventilsitz 318 angeordnet. Die Vertiefung 310 und die Ventilkammer 316 sind über Strömungspfade 314 miteinander verbunden.

Um eine elastische Vorspannung des Ventilverschlusselements 324 in Richtung auf die den Ventilsitz 318 freigebende Stellung zu erreichen, ist an dem auslenkbaren Ende des Ventilverschlusselements 324 eine Feder 326 angelenkt, welche ihren Sitz in der Bodenfläche der Ventilkammer 316 hat.

An dieser Stelle sei der Vollständigkeit halber darauf hingewiesen, dass die elastische Vorspannung auch durch andere Mittel realisiert werden kann, als Beispiel sei hier ein Elastomerelement oder ein pneumatisches Element genannt.

Hinsichtlich der Funktion der Fördervorrichtung 300 kann vollinhaltlich auf die Beschreibung der Funktion der Fördervorrichtung 200 der Figuren 2a und 2b verwiesen werden. Anzumerken ist lediglich, dass die um das Ventilverschlusselements 324 herum gebildete Schnittlinie eine so geringe Querschnittsfläche aufweist, dass auch sie im Vergleich mit der Vertiefung 310 keinen nennenswerten Beitrag zur Haltekraft liefert.

Nachzutragen ist mit Bezug auf Figur 3c, dass das Ventilverschlusselement 324 als Kreissegment ausgebildet sein kann. Dies hat insbesondere im Hinblick auf die Herstellung und den Verschleiß im Gebrauch Vorteile. Denkbar sind jedoch auch verschiedene andere geometrische Ausbildungen des Ventilverschlusselementes 324, genannt sei hier nur beispielhaft eine rechteckige Form.

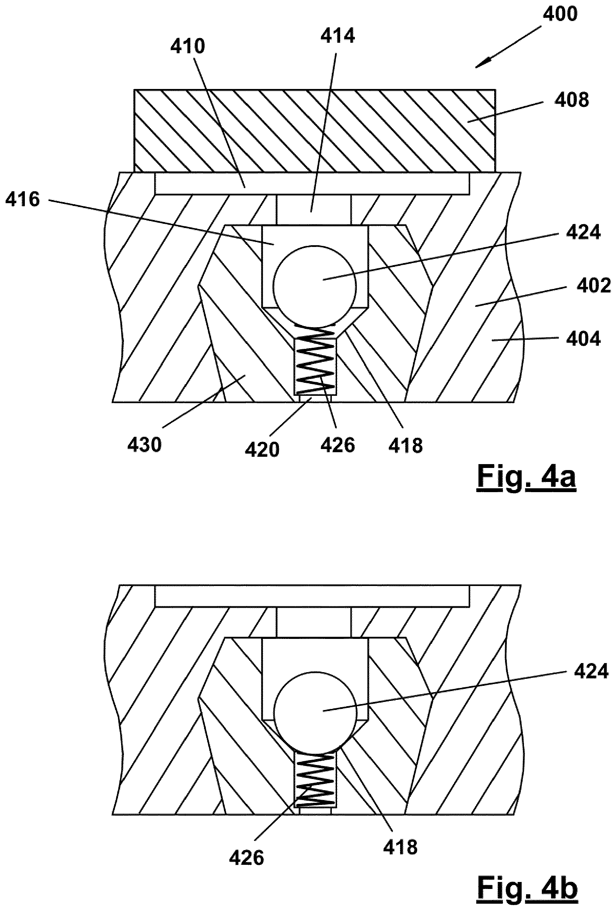

Die Figuren 4a, 4b, 5a, 5b, 6a und 6b zeigen weitere Ausführungsformen der erfindungsgemäßen Fördervorrichtung 400, 500, 600, wobei zwischen den Figuren 4a/4b und 5a/5b und 6a/6b lediglich kleinere, konstruktive Änderungen vorhanden sind. Gemeinsam ist allen drei Ausführungsformen, dass das Ventilverschlusselement 424, 524, 624 als Ventilkugel ausgebildet ist. Alle Elemente, d.h. die Ventilkammer 416, 516, 616, die Saugleitung 420, 520, 620, der Ventilsitz 418, 518, 618 und der Strömungspfad 414, 514, 614 sind in dem Förderband 402, 502, 602 vorzugsweise im Kerngurt 404, 504, 604 ausgebildet, so dass auf eine gesonderte Decklage verzichtet werden kann.

Der Strömungspfad 414, 514, 614 ist in diesen Ausführungsbeispielen die Verbindung zwischen der Vertiefung 410, 510, 610 in der Oberfläche des Kerngurts 404, 504, 604 und dem Innenraum 430, 530, 630 in dem Kerngurt 404, 504, 604, in dem die Ventilkugel 424, 524, 624 angeordnet ist. Wie auch bei den vorhergehenden Ausführungsbeispielen ist der Strömungspfad 414, 514, 614 über die Ventilkammer 416, 516, 616 und die Saugleitung 420, 520, 620 mit der Vakuumeinheit fluidisch verbunden.

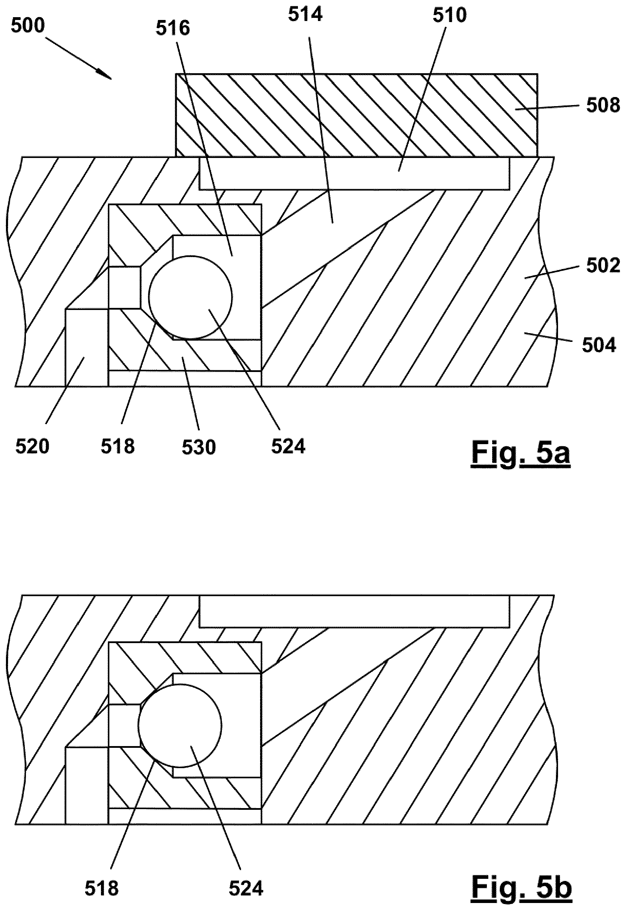

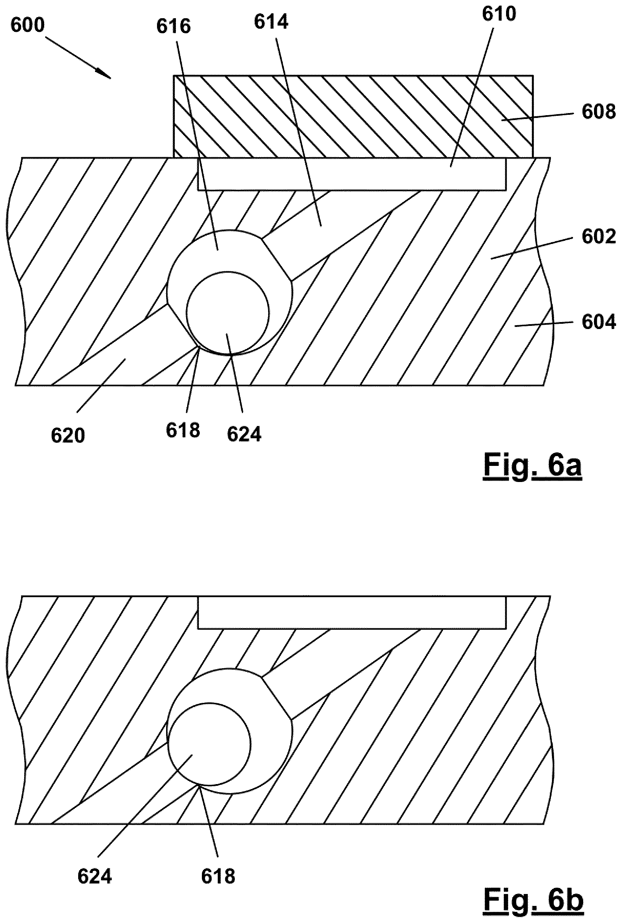

Bei dem Ausführungsbeispiel der Figuren 4a und 4b wird die Ventilkugel 424 ähnlich wie bei dem Ausführungsbeispiel der Figuren 3a und 3b von einer Feder 426 in die Öffnungsstellung des Ventils vorgespannt, während die Ventilkugel 524, 624 der Ausführungsformen der Figuren 5a/5b, 6a/6b durch die Schwerkraft in die Öffnungsstellung des Ventils gedrängt wird.

Hinsichtlich der Funktion der Fördervorrichtung 400, 500, 600 kann vollinhaltlich auf die Beschreibung der Funktion der Fördervorrichtung 200 der Figuren 2a und 2b bzw. deren Abwandlung in den Figuren 3a bis 3c verwiesen werden.

Abschließend soll noch auf weitere konstruktive Unterschiede zwischen den Ausführungsformen der Figuren 4a, 4b bzw. 5a, 5b bzw. 6a, 6b eingegangen werden.

In dem Ausführungsbeispiel der Figuren 4a und 4b ist der Strömungspfad 414, die Ventilkammer 416, der Ventilsitz 418 und die Saugleitung 420 im Wesentlichen orthogonal zur Oberfläche des Kerngurts 404 untereinander angeordnet. Hieraus ergibt sich der Vorteil, dass in der Herstellung für die einzelnen Elemente möglichst wenig Material aus dem Förderband 402 entnommen werden muss.

Wird jedoch als Rückstellkraft die Gravitation verwendet, ist eine zur Oberfläche des Kerngurts 504, 604 schräg verlaufende Anordnung des Ventilsitzes 518, 618 und demzufolge auch der Saugleitung 520, 620 in Richtung auf die Ventilkammer 516, 616 zu vorteilhaft. Bei einer kugelförmigen Ausbildung der Ventilkammer 616 kann der Übergang zur Saugleitung 620 den Ventilsitz 618 ausbilden.

Des Weiteren ist auch der Strömungspfad 514, 614 seitlich an der Ventilkammer 516, 616 angeordnet, und zwar an der Seite, die der Seite gegenüberliegt, an der der Ventilsitz 518, 618 und die Saugleitung 520, 620 angeordnet sind. Der Strömungspfad 514, 614 kann schräg oder senkrecht in Bezug auf die Oberfläche des Kerngurts 504, 604, auf die das Fördergut (nicht dargestellt) aufgelegt wird, angeordnet sein. Durch diese konstruktiven Merkmale wird erreicht, dass die Ventilkugel 524, 624 möglichst einfach von der den Ventilsitz 518, 618 verschließenden in einer den Ventilsitz 518, 618 freigebenden Stellung und zurück wechseln kann und sicher in beiden Stellungen verbleiben kann. Eine solche Anordnung kann aus den Figuren 5a/5b und 6a/6b ersehen werden.

Nachzutragen ist noch, dass auch im Falle der Ausführungsformen der Figuren 5a/5b bzw. 6a/6b eine Federunterstützung ähnlich der in dem Ausführungsbeispiel der Figuren 4a/4b vorgesehen sein kann.

Eine Einsatzeinheit wird als weiterer Gesichtspunkt der Erfindung im Folgenden anhand der Zeichnungen 4a/4b, 5a/5b und 7 beschrieben werden.

Eine Einsatzeinheit 430, 530, 730 der Fördervorrichtung 400, 500, 700 umfasst die Ventilkammer 416, 516, 716, das Ventilverschlusselement 424, 524, 724, welches kugelförmig ausgebildet sein kann, den Ventilsitz 418, 518, 718, und einen Teil der Saugleitung 420, 520, 720.

Die Einsatzeinheit 400, 500 aus den Figuren 4a/4b und 5a/5b ist in dem Förderband 402, 502 derartig angeordnet, dass diese von unten (in Bezug auf die Oberfläche des Förderbandes 402, 502 auf die das Fördergut 408, 508 platziert wird) und als Gesamteinheit dem Förderband 408, 508 entnommen werden kann.

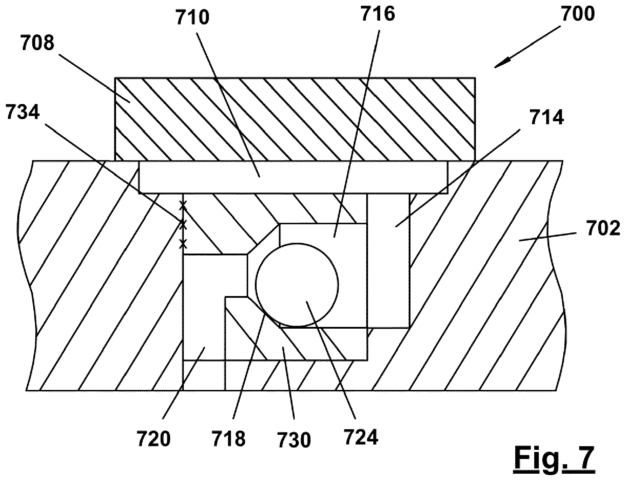

Dahingegen ist die Einsatzeinheit 730 aus der Fig. 7 in dem Förderband 702 derartig angeordnet, dass die Ausbuchtung für diese von oben (in Bezug auf die Oberfläche des Förderbandes 702 auf die das Fördergut 708 (nicht dargestellt) platziert wird) eingearbeitet, z.B. gefräst werden kann. Dies ist insofern möglich, als die Einsatzeinheit 730 die Kante 734 zwischen der Einsatzeinheit 730 und dem Förderband 702, auf der Seite über der Saugleitung 720 und unter der Vertiefung 710 (in Bezug auf die Oberfläche des Förderbandes 702 auf die das nicht dargestellte Fördergut 708 platziert wird), abdichtet.

Es erschließt sich leicht, dass eine Anordnung der bezeichneten Elemente als Einsatzeinheit 430, 530, 730 vorteilhaft ist, da ein Austausch defekter oder fehlerhafter Einheiten so einfach, schnell und kostengünstig vonstattengehen kann. Darüber hinaus können bestehende Fördervorrichtungen mit den Einsatzeinheiten 430, 530, 730 einfach, schnell und kostengünstig nachgerüstet werden - nur die Vertiefung 410, 510, 610, 710, der Strömungspfad 414, 514, 614, 714, die Ausbuchtung für die Einsatzeinheit 430, 530, 730 und ein Teil der Saugleitung 420, 520, 620, 720, müssen in das Förderband eingearbeitet, z.B. gefräst werden.

Grundsätzlich ist es jedoch auch denkbar, die erforderlichen Hohlräume direkt in das Band einzuarbeiten, beispielsweise entweder beim Vernetzen des Bandmaterials und/oder durch nachträgliches mechanisches Bohren/Fräsen, so dass kein separates "Ventilgehäuse" hergestellt und in das Band eingeklebt werden muss.

## Patentansprüche

1. Fördervorrichtung (200) umfassend
• ein Förderband (202) mit einer Auflagefläche (203),
• eine dem Förderband (202) zugeordnete Ventilkammer (216), wobei die Ventilkammer (216) einen mit einer Saugleitung (220) in Verbindung stehenden Ventilsitz (218) und ein Ventilverschlusselement (224) aufweist, wobei das Ventilverschlusselement (224) zwischen einer den Ventilsitz (218) verschließenden und einer den Ventilsitz (218) freigebenden Stellung verstellbar ist, und
• wenigstens einen in die Ventilkammer (216) mündenden Strömungspfad (214),
wobei dann, wenn ein der Auflagefläche (203) zugeordnetes Ende des Strömungspfads (214) von einem auf dem Förderband (202) zu fördernden, aber nicht zur Fördervorrichtung (200) gehörenden Objekt (208) nicht bedeckt ist, mittels einer von der Saugleitung (220) herrührenden Strömung auf das Ventilverschlusselement (224) eine Kraft ausgeübt wird, welche es in Richtung seiner den Ventilsitz (218) verschließenden Stellung zieht, und
wobei dann, wenn das der Auflagefläche (203) zugeordnete Ende des Strömungspfads (214) von dem auf dem Förderband (202) zu fördernden, aber nicht zur Fördervorrichtung (200) gehörenden Objekt (208) bedeckt ist, auf das Ventilverschlusselement (224) eine in Richtung der den Ventilsitz (218) freigebenden Stellung des Ventilverschlusselement (224) wirkende Kraft ausgeübt wird,
**dadurch gekennzeichnet, dass** der wenigstens eine Strömungspfad (214) in die Bodenfläche (212) einer in der Auflagefläche (203) vorgesehenen Vertiefung (210) mündet.

2. Fördervorrichtung nach Anspruch 1,
**dadurch gekennzeichnet, dass** sie ferner eine der Saugleitung (220) zugeordnete Vakuumeinheit umfasst.

3. Fördervorrichtung nach einem der vorhergehenden Ansprüche,
**dadurch gekennzeichnet, dass** die Ventilkammer (216) in dem Förderband (202) ausgebildet ist.

4. Fördervorrichtung nach einem der vorhergehenden Ansprüche,
**dadurch gekennzeichnet, dass** eine Decklage (206) des Förderbandes (202), welche der Auflagefläche (203) zugeordnet ist, oder wenigstens ein Teilbereich der Decklage (206) des Förderbandes (202), welche der Auflagefläche (203) zugeordnet ist, das Ventilverschlusselement (224) ausbildet.

5. Fördervorrichtung nach einem der vorhergehenden Ansprüche,
**dadurch gekennzeichnet, dass** die Decklage (206) des Förderbandes (202), welche der Auflagefläche (203) zugeordnet ist, zumindest in einem Teilbereich elastisch, beispielsweise unter Verwendung von Naturkautschuk und/oder Silikonkautschuk, ausgebildet ist.

6. Fördervorrichtung nach einem der Ansprüche 1 bis 3,
**dadurch gekennzeichnet, dass** das Ventilverschlusselement (324) als ein im Wesentlichen flächiges Element ausgebildet ist, das aus der Decklage (306) schwenkbar auslenkbar ist.

7. Fördervorrichtung nach Anspruch 6,
**dadurch gekennzeichnet, dass** das im Wesentlichen flächige Element elastisch in Richtung auf die den Ventilsitz (318) freigebende Stellung zu vorgespannt ist.

8. Fördervorrichtung nach einem der Ansprüche 6 oder 7,
**dadurch gekennzeichnet, dass** das Ventilverschlusselement (324) als Kreissegment ausgebildet ist.

9. Fördervorrichtung nach einem der Ansprüche 6 bis 8,
**dadurch gekennzeichnet, dass** das Ventilverschlusselement (324) mit einem Scharnier (328) in der Decklage (306) angeordnet ist.

10. Fördervorrichtung nach einem der Ansprüche 1 bis 3,
**dadurch gekennzeichnet, dass** das Ventilverschlusselement (424, 524, 624, 724) im Wesentlichen kugelförmig ausgebildet ist.

11. Fördervorrichtung nach Anspruch 10,
**dadurch gekennzeichnet, dass** das im Wesentlichen kugelförmige Ventilverschlusselement (424, 524, 624, 724) elastisch in Richtung auf die den Ventilsitz (418, 518, 618, 718) freigebende Stellung zu vorgespannt ist und/oder mittels Schwerkraft in Richtung auf die den Ventilsitz (418, 518, 618, 718) freigebende Stellung zu gedrängt wird.

12. Fördervorrichtung nach einem der Ansprüche 1 bis 11,
**dadurch gekennzeichnet, dass** das Förderband (102) ein endlos umlaufendes Förderband (102) ist und dass die Fördervorrichtung (100) wenigstens zwei Umlenkwalzen (104) umfasst, um die das endlose Förderband (102) herumgeführt ist.

13. Förderband (202) umfassend
• eine Auflagefläche (203)
• eine dem Förderband (202) zugeordnete Ventilkammer (216), wobei die Ventilkammer (216) einen mit einer Saugleitung (220) in Verbindung stehenden Ventilsitz (218) und ein Ventilverschlusselement (224) aufweist, wobei das Ventilverschlusselement (224) zwischen einer den Ventilsitz (218) verschließenden und einer den Ventilsitz (218) freigebenden Stellung verstellbar ist, und
• wenigstens einen in die Ventilkammer (216) mündenden Strömungspfad (214),
wobei dann, wenn ein der Auflagefläche (203) zugeordnetes Ende des Strömungspfads (214) von einem auf dem Förderband (202) zu fördernden, aber nicht zur Fördervorrichtung (200) gehörenden Objekt (208) nicht bedeckt ist, mittels einer von der Saugleitung (220) herrührenden Strömung auf das Ventilverschlusselement (224) eine Kraft ausgeübt wird, welche es in Richtung seiner den Ventilsitz (218) verschließenden Stellung zieht, und
wobei dann, wenn das der Auflagefläche (203) zugeordnete Ende des Strömungspfads (214) von dem auf dem Förderband (202) zu fördernden, aber nicht zur Fördervorrichtung (200) gehörenden Objekt (208) bedeckt ist, auf das Ventilverschlusselement (224) eine in Richtung der den Ventilsitz (218) freigebenden Stellung des Ventilverschlusselements (224) wirkende Kraft ausgeübt wird,
**dadurch gekennzeichnet, dass** der wenigstens eine Strömungspfad (214) in die Bodenfläche (212) einer in der Auflagefläche (203) vorgesehenen Vertiefung (210) mündet, und
vorzugsweise ferner umfassend wenigstens ein Förderbandmerkmal aus einem der Ansprüche 2 bis 12.

14. Einsatzeinheit für ein Förderband nach Anspruch 13,
umfassend eine Ventilanordnung mit wenigstens einem Ventilanordnungsmerkmal gemäß einem der Ansprüche 1 bis 12.

15. Verwendung eines Förderbandes (102) nach Anspruch 13 in einer Fördervorrichtung (100) nach einem der Ansprüche 1 bis 12.
